(19) Europäisches Patentamt / European Patent Office / Office européen des brevets

(11) **EP 3 289 245 B1**

(12) **EUROPÄISCHE PATENTSCHRIFT**

(45) Veröffentlichungstag und Bekanntmachung des Hinweises auf die Patenterteilung:
**14.10.2020 Patentblatt 2020/42**

(51) Int Cl.:
**F16H 57/12** *(2006.01)*    **F16H 57/00** *(2012.01)*

(21) Anmeldenummer: **16710692.1**

(86) Internationale Anmeldenummer:
**PCT/EP2016/054876**

(22) Anmeldetag: **08.03.2016**

(87) Internationale Veröffentlichungsnummer:
**WO 2016/173751 (03.11.2016 Gazette 2016/44)**

(54) **VORRICHTUNG UND VERFAHREN ZUR ZAHNRADGERÄUSCHVERMINDERUNG**

DEVICE AND METHOD FOR REDUCING GEAR NOISE

SYSTÈME ET PROCÉDÉ PERMETTANT DE RÉDUIRE LES BRUITS DE ROUE DENTÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.04.2015 DE 102015207632**

(43) Veröffentlichungstag der Anmeldung:
**07.03.2018 Patentblatt 2018/10**

(73) Patentinhaber: **Robert Bosch GmbH**
**70442 Stuttgart (DE)**

(72) Erfinder:
• **DACKERMANN, Tim**
**72072 Tuebingen (DE)**
• **BENZEL, Timo**
**72127 Kusterdingen (DE)**

(56) Entgegenhaltungen:
**WO-A1-98/30813     WO-A1-2012/165946**
**US-A- 5 291 975**

## Beschreibung

Stand der Technik

Diese Erfindung betrifft eine Vorrichtung zur Verringerung von Zahnradgeräuschen eines mit einem Abtriebszahnrad in Zahneingriff stehenden Antriebszahnrades, wobei Kräfte von den Zahnrädern über ein Auflager in ein Gehäuse einleitbar sind, wobei die Vorrichtung eine Sensoreinrichtung, eine Regeleinrichtung und einen Aktuator aufweist und wobei mittels der Sensoreinrichtung ein dynamisches Schwingungssignal erfassbar ist und das Schwingungssignal der Regeleinrichtung zuführbar ist, wobei mittels der Regeleinrichtung ein Schwingungsverringerungssignal erzeugbar ist, das dem Aktuator zuleitbar ist, wobei der Aktuator derart an oder in dem Auflager angeordnet ist, dass Kräfte von den Zahnrädern über den Aktuator in das Gehäuse übertragbar sind, und wobei mittels des Aktuators aktiv eine relative Verschiebung und/oder eine Kraftbeaufschlagung einer von dem Auflager getragenen Komponente bewirkbar ist. Weiter betrifft die Erfindung ein Getriebe und ein Verfahren zur Verringerung von Zahnradgeräuschen.

Im Stand der Technik ist bekannt, dass bei einer Drehmomentübertragung über ein Zahnrad in ein anderes Zahnrad, beispielsweise in einem Getriebe, das Abwälzen der Zähne aufeinander Geräusche erzeugt. Dies ist darin begründet, dass der Eingriff der Zähne jeweils eine Stoßanregung für die einzelnen Zähne bedeutet, welche dadurch zu Eigenschwingungen angeregt werden. Dazu kommt eine Anregung durch die von der Winkelstellung abhängige Zahnsteifigkeit, die sich im Verlauf des Zahneingriffs ändert. Zudem kann eine Weganregung stattfinden. Die Zahnräder führen aufgrund der schwankenden Zahnsteifigkeit Schwingungen mit einer Frequenz aus, die der Drehzahl des antreibenden Zahnrades multipliziert mit einem ganzzahligen Vielfachen der Zähnezahl entspricht. Auf diese Weise regt sich ein die Zahnräder umfassendes Getriebe unter Last selbst zu derartigen Schwingungen an. Es handelt sich somit um ein parametererregtes System. Die Schwingungen aus einer oder mehreren Zahnradgetriebestufen erzeugen unter Last oft die dominanten Komponenten des Gesamtgeräusches eines Getriebes. Jedoch verursacht die Drehschwingung selbst nicht den Luftschall. Erst über translatorische Wechselkräfte, die an der Zahnoberfläche wirken, werden die Vibrationen durch Körperschall über die Lager an ein Getriebegehäuse übertragen und von dort als Luftschall abgestrahlt.

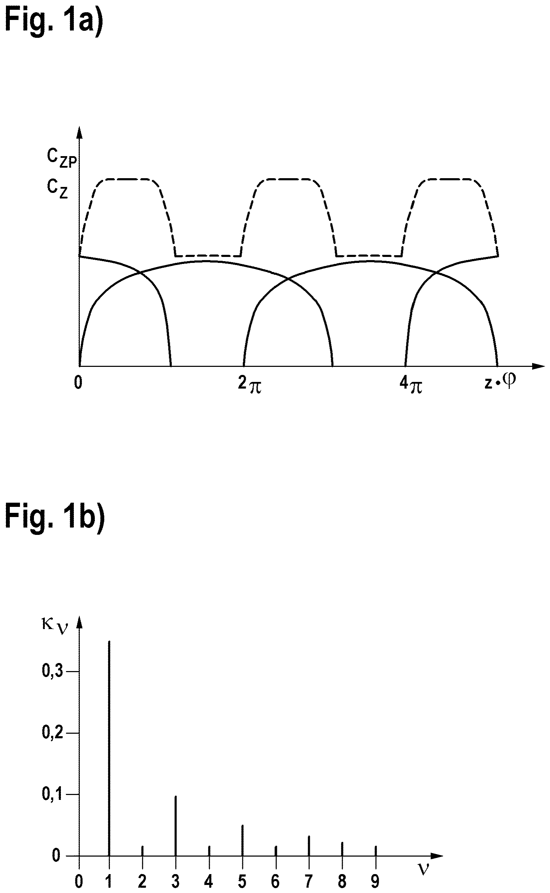

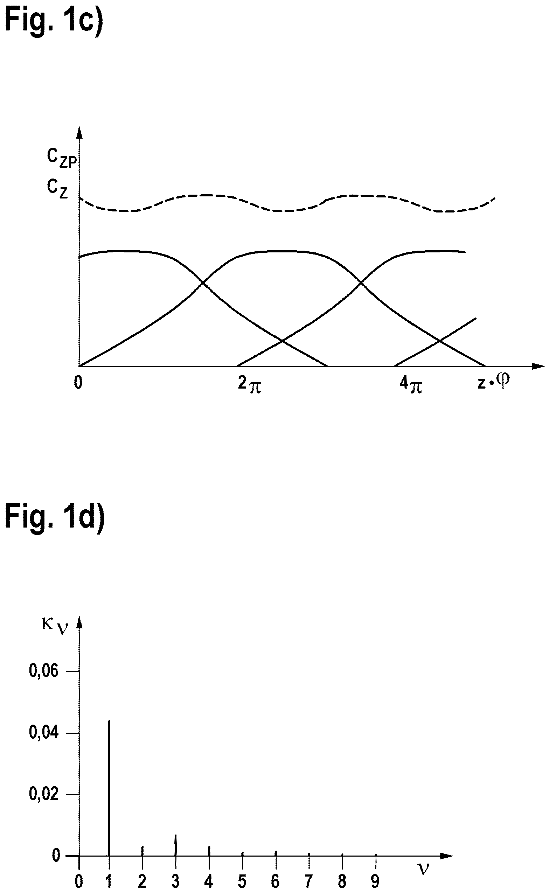

Wie in Figur 1 ist in vier Teilfiguren 1a), 1b), 1c) und 1d) die Kopplungssteifigkeit von Stirnradgetrieben diagrammatisch dargestellt. Figur 1a) zeigt ein Diagramm der Verzahnungssteifigkeit $C_Z$ von Zähnen von zwei geradverzahnten Zahnrädern. Auf der Abszisse sind Winkel in Radiant angegeben, wobei der Umfangswinkel von $2\pi$ rad somit dem Umfangsabschnitt eines Zahnes entspricht. Mit durchgezogenen Linien ist die Steifigkeit von zwei Zähnen wiedergegeben, welche miteinander in Eingriff stehen. Eine solche durchgezogene Linie verläuft zum Beispiel von dem Ursprung des Diagramms in einem Bogen mit aufgesteilten Enden bis etwa $3\pi$ rad. Zu Beginn und zum Ende des Eingriffs dieses Zahnpaares ist auch ein weiteres Zahnpaar in Eingriff, was durch weitere bogenförmige durchgezogene Linien dargestellt ist. An den Positionen der Zahnräder, in denen zwei Zahnpaare in Eingriff sind, erhöht sich die Gesamtsteifigkeit der Getriebestufe erheblich, wie durch die gestrichelte Linie $C_{ZP}$ dargestellt ist, welche die Zahnsteifigkeit der in Eingriff befindlichen Zahnpaare wiedergibt. Es ist deutlich zu sehen, dass diese Linie an den Stellen, an denen zwei Zahnpaare in Eingriff sind, deutlich nach oben ausschlägt. Auf diese Weise ergibt sich eine erheblich schwankende Steifigkeit einer solchen Getriebestufe. In der Figur 1b) ist ein Frequenzspektrum wiedergegeben, welches die angeregten Vielfachen der Zahneingriffsfrequenz wiedergibt. Die Grundwelle der Zahneingriffsfrequenz ist mit der Ziffer 1 bezeichnet. Die ungeradzahligen Oberwellen 3, 5 und 7 werden durch den angenährt rechteckförmigen Verlauf der Drehmomentsteifigkeit besonders stark angeregt. In Summe ergibt sich ein deutlich hörbares Frequenzspektrum mit einer recht hohen Gesamtleistung.

In der Figur 1c) ist die Kopplungssteifigkeit eines Stirnradgetriebes mit Schrägverzahnung dargestellt. Es ist hier zu sehen, dass sich durch die Schrägverzahnung mehr Zahnpaare, nämlich bis zu drei Zahnpaare, gleichzeitig in Eingriff befinden. Außerdem verlaufen die bogenförmigen Steifigkeitskurven der Zahnpaare an ihren seitlichen Rändern sehr viel flacher, was einen langsameren Anstieg und Abfall der Steifigkeit bei einem Zahneingriff bedeutet. Insgesamt ergibt sich eine erheblich vergleichmäßigte gestrichelt dargestellt Kurve für die Verzahnungssteifigkeit. Dementsprechend ist die Geräuschanregung durch eine solche schräg verzahnte Zahnradpaarung erheblich geringer. Dies zeigt sich auch in dem in Figur 1d) dargestellten Frequenzspektrum, in dem schon die Grundwelle eine um etwa den Faktor 8 verringerte Amplitude aufweist; außerdem fällt auch die Anregung der Oberwellen erheblich geringer aus. Dennoch ist auch im Falle einer Schrägverzahnung noch mit einer verbleibenden Geräuschentwicklung zu rechnen. Zudem ist eine Schrägverzahnung merklich teurer in der Herstellung.

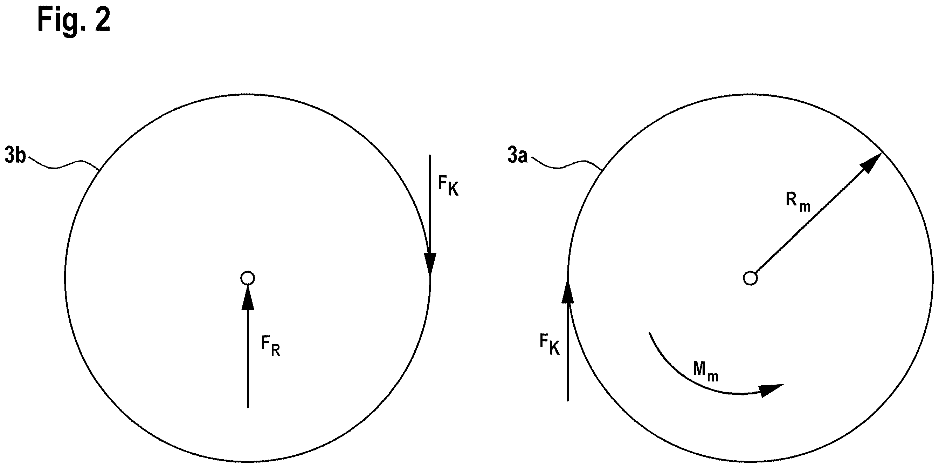

Bei einem Stirnradgetriebe, aber auch bei anderen Zahngetrieben, übt das Antriebsrad, welches mit einem Antriebsdrehmoment $M_m$ beaufschlagt wird, zunächst eine momentenerzeugte Kraft $F_m = M_m / R_m$ auf das Antriebszahnrad aus. $R_m$ ist dabei der Wälzkreisradius des Antriebszahnrads. Die Situation ist in der Figur 2 schematisch dargestellt. Die tatsächlich wirkende Kopplungskraft $F_k$, die der momentenerzeugten Kraft $F_m$ zusätzlich überlagerte dynamische Kraftkomponenten umfasst, wird vom Antriebszahnrad 3a auf das Abtriebszahnrad 3b übertragen, wodurch ein Abtriebsdrehmoment in das Abtriebszahnrad 3b eingebracht wird. Aufgrund des Kräftegleichgewichts wirkt die Kopplungskraft

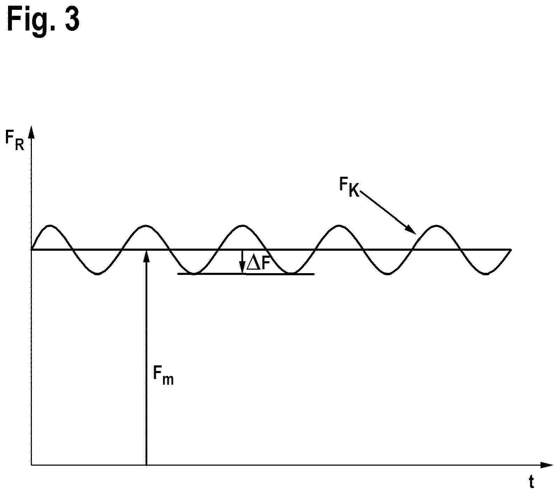

$F_k$ in gleicher Größe auf das Abtriebszahnrad 3b ein. Wiederum in gleicher Größe erscheint die Kopplungskraft $F_k$ und $F_R$ als Reaktionskraft des Lagers des Abtriebszahnrades 3b. Aufgrund der selbstanregenden Drehschwingung der beiden Zahnräder 3a, 3b schwankt die Kopplungskraft $F_k$ selbst bei einem konstanten Antriebsdrehmoment $M_m$ um eine periodische Wechselkraft $\Delta F$, die in der Schwingungen der Zähne und in Drehschwingungen begründet ist. Ebenso schwankt damit die Reaktionskraft $F_R$ am Lager, was zur Erzeugung von Körperschall und damit zu Geräuschen führt. Der Kraftverlauf von $F_R$ ist in einem Diagramm dargestellt, das in Figur 3 gezeigt ist. Beispielhaft ist ein sinusförmiger Verlauf einer Wechselkraft $\Delta F$ dargestellt, der einer momentenerzeugten Konstantkraft $F_m$ überlagert ist, wodurch sich in Summe die Kopplungskraft zu $F_k = F_m + \Delta F$ ergibt.

Im Stand der Technik sind Methoden zur Reduktion der Körperschallentkopplung oder der Schallabstrahlung durch das Gehäuse bekannt, die nachfolgend aufgelistet sind:

- akustische Kapselung des Getriebegehäuses
- Konstruktion des Gehäuses zur Minimierung der Schallabstrahlung
- Einbau von akustisch harten Lagern oder Lagersitzen
- Einbau von Schwingungstilgern
- Dämmung des Getriebegehäuses
- Anpassung der Materialpaarung der Zahnräder
- Anpassung der Zahngeometrie (z.B. Kopfrücknahme, u. a.).

Diese Methoden sind beispielsweise in Linke, H: Stirnradverzahnung, Hansaverlag, München, Wien, 2010 und Naunheimer, H.; Bertsche, B.; Lechner, G.: Fahrzeuggetriebe - Grundlagen, Auswahl, Auslegung und Konstruktion. Springer Verlag, Berlin, Heidelberg, 1. Auflage, 2007 beschrieben.

Außerdem sind aktive Maßnahmen zur Verringerung der Schallabstrahlung bekannt, etwa aus der amerikanischen Patentschrift US5809843. In deren Figuren 7a und 8 ist ein System zur Verringerung von Getriebegeräuschen gezeigt. Ein Schwingungssensor 50 ist an dem Getriebegehäuse angebracht und nimmt Körperschall aus dem Getriebegehäuse auf. Der Schwingungssensor kann als Beschleunigungssensor oder Mikrofon ausgebildet sein. Das Schwingungssignal wird zu einer Steuereinrichtung geleitet, welche ein Drehmomentsignal erzeugt, welches zu einem Elektromotor geleitet wird, welcher wiederum ein entsprechendes Drehmoment auf das Antriebszahnrad des Getriebes ausübt. Durch die Rückkopplung werden die Getriebegeräusche mittels einer Reduktion der Oberflächenvibration verringert. Nachteilig an dieser Lösung ist, dass der Körperschall sich durch das Getriebegehäuse ausbreitet, bis er den Schwingungssensor erreicht und dabei schon Schall abstrahlt. Durch diesen Weg des Körperschalls kann dieser sich verändern, was die Berechnung eines korrekten Kompensationssignals erheblich erschweren kann. Üblicherweise erfordert eine solche Regelung ein mathematisches Modell, welches das Schwingverhalten der Wellen, der Lager und des Gehäuses abbildet. Dieses Modell nennt sich "Sekundärpfadmodell" und ist u. A. in C. Hansen, S. Snyder, X. Qiu, L. Brooks and D. Moreau, "Active control of noise and vibration," Bd. 2, CRC Press New York, 2013 beschrieben. Zudem erfordert eine Regelung, die ein Störsignal ausregeln soll, dass zumindest ein kleines Störsignal immer noch bei der Sensoreinrichtung ankommt. Dies bedeutet, dass selbst bei einer sehr gut funktionierenden Regelung noch immer Körperschall durch das Gehäuse laufen muss, wodurch auch bewirkt wird, dass Schall abgestrahlt wird.

Weiter ist eine Veröffentlichung von Yuan H. Guan, Teik C. Lim und W. Steve Shepard Jr. mit dem Titel "Experimental study on active vibration control of a gearbox system" bekannt. Darin ist offenbart, einen Aktuator zur Geräuschunterdrückung an einer Auflagerstelle im Kraftfluss von einer Zahnradeingriffsstelle zu einem Gehäuse anzuordnen. Dazu wird ein Signal eines Sensors, der am Gehäuse angeordnet ist, einer Regeleinrichtung zugeführt Nachteilig ist jedoch der hohe Verkabelungs- und Montageaufwand für den Aktuator und den Sensor, sowie die Tatsache, dass nicht an der Stelle gemessen wird, an der die Beeinflussung stattfindet, sodass in dem Messsignal nachteilig eine Verzögerungszeit enthalten ist und Veränderungen des Signals stattfinden können.

Das Dokument WO 98/30813 A1 offenbart eine Vorrichtung und ein Verfahren zur Reduktion von Vibrationen beziehungsweise Geräuschen eines Getriebes.

Das Dokument WO 2012/165946 A1 offenbart ein Verfahren zur Vibrationskompensation und ein Verfahren zur Verhinderung einer Fehlausrichtung in einem dynamischen Rotorsystem.

Die vorliegende Erfindung hat zur Aufgabe, eine Vorrichtung, insbesondere ein Getriebe mit der Vorrichtung, beziehungsweise ein Verfahren zur Verringerung von Zahnradgeräuschen zu verbessern.

Offenbarung der Erfindung

Die vorstehende Aufgabe wird erfindungsgemäß entsprechend der unabhängigen Ansprüche 1, 12 und 13 gelöst.

Erfindungsgemäß wird vorgeschlagen, die Geräusche einer aufeinander abwälzenden Verzahnung von zwei Zahnrädern dadurch zu unterdrücken, dass an einem Auflager, das eines der Zahnräder unmittelbar oder indirekt trägt, ein Aktuator angeordnet wird, über den Kräfte übertragen werden, welche von dem Zahneingriff der Zahnräder ausgehen. Schwingungen, die von dem Zahneingriff erzeugt werden mittels einer Sensoreinrichtung erfasst und Sensorsignale an eine Regeleinrichtung weitergeleitet, welche ihrerseits die Signale zur Weiterleitung an den Aktuator aufbereitet. So kann bewirkt werden, dass der Aktuator Bewegungen ausführt oder Kräfte in das System einbringt, welche dazu geeignet sind, die Zahnradgeräusche zu vermindern. Kern der Erfindung ist es, den Aktuator nur nicht als Aktuator zu verwenden, sondern ihn auch als Sensoreinrichtung einzusetzen. Dabei kann ausgenutzt werden, dass für viele Aktuatoren genutzte physikalische Effekte, wie etwa Magnetostriktion, oder andere magnetische oder elektrische Effekte, insbesondere der Piezoeffekt, auch umgekehrt wirksam sind, d. h., eine mechanische Dehnung oder Verlagerung in ein Magnetfeld bzw. ein elektrisches Feld umwandeln können und umgekehrt ebenso ein Magnetfeld bzw. ein elektrisches Feld in eine mechanische Dehnung oder Verlagerung umwandeln können.

Unter einem Auflager wird eine Stelle oder ein Abschnitt eines Bauteils oder ein ganzes Bauteil verstanden, an dem zu einem anderen Bauteil Kräfte übertragen werden. Als eine Variante wird vorgeschlagen, dass es sich bei dem Auflager um einen Teil eines statisch bestimmten Lagerungssystems handelt.

Bei der Betrachtung, ob der Aktuator eine Kraft und/oder eine Dehnung bzw. Verschiebung erzeugt, ist zu berücksichtigen, dass beides durch die Federkonstanten und Massen der beteiligten Komponenten miteinander in Verbindung steht. Vorzugsweise verläuft die Wirkrichtung des Aktuators zumindest angenähert in Richtung der Kraftübertragung zwischen den Zahnrädern. Der Aktuator kann beispielsweise an einem Auflager angeordnet sein, welches bspw. eine drehbare Welle an einer Lagerstelle im Gehäuse trägt oder welches eine nicht drehbare Achse im Gehäuse aufnimmt. Es ist weiter denkbar, den Aktuator an einer Lagerstelle eines Zahnrades auf einer Achse anzuordnen, wobei die Achse bevorzugt am Gehäuse befestigt ist. Weiter ist denkbar, mehrere Aktuatoren an mehreren Lagerstellen anzuordnen. Beispielsweise kann bei einer auskragenden Welle mit einem Zahnrad am auskragenden Ende jeweils ein Aktuator an zwei Lagerstellen im Gehäuse angeordnet sein, in welchem eine Welle mit dem Zahnrad gelagert ist. Ein Zahnrad kann auch in einem Zwischenraum zwischen zwei Auflagern eines Gehäuses angeordnet sein, wobei ein Aktuator an beiden Auflagerstellen angeordnet sein kann. Der Aktuator kann so angeordnet sein, dass er in radialer Richtung einer Achse oder einer Welle oder eines Zahnrades liegt, das an einem Auflager angeordnet ist, sodass Radialkräfte über ihn laufen können. Es ist weiter denkbar, einen Aktuator so anzuordnen, dass über ihn vor allem Axialkräfte verlaufen. Dies kann bei schräg verzahnten Zahnrädern vorteilhaft sein. Es können Aktuatoren für axiale und für radiale Kräfte an einer Lagerstelle oder an verschiedenen Lagerstellen miteinander kombiniert werden. Die Regeleinrichtung, mittels der die Bewegung bzw. Krafterzeugung des Aktuators geregelt wird, nutzt vorzugsweise ein Winkelsignal und bevorzugt zusätzlich ein Drehzahlsignal, welches bspw. von der Sensoreinrichtung an dem Auflager oder aus anderen Sensoren gewonnen werden kann. Durch den Aktuator wird bevorzugt eine Schwingungsentkopplung von Getriebekomponenten wie Achsen, Wellen und Zahnrädern von dem Gehäuse bewirkt. Um dies zu unterstützen, kann zusätzlich ein passiver Dämpfer an der Lagerstelle vorgesehen sein, über den Kraft aus dem Zahnradeingriff verläuft. Im Gegensatz zu dem aktiv geregelten Aktuator funktioniert ein solcher Dämpfer passiv. Dadurch wird die Entkopplung der Getriebekomponenten und des Gehäuses weiter verbessert. Ein solcher passiver Dämpfer kann bspw. als Folie und/oder aus Gummi ausgeführt sein.

Die Unteransprüche zeigen bevorzugte Weiterbildungen der Erfindung. In einer Ausführungsform wird der Aktuator nicht zeitgleich im Aktuatorbetrieb und im Sensorbetrieb betrieben, sondern diese Betriebsarten finden zeitlich zueinander versetzt statt. Vorzugsweise findet der Aktuatorbetrieb länger als der Sensorbetrieb statt. Dies hat den Vorteil, dass der Aktuator über einen größeren Zeitraum die Schwingungen ausregelt und somit eine aktive Geräuschminderung leistet. Vorzugsweise sind die Anteile des Sensorbetriebs im Vergleich zu den Anteilen des Aktuatorbetriebs am Gesamtbetrieb kleiner und vorzugsweise erheblich geringer. Bevorzugt wird der Sensorbetrieb in regelmäßigen Zeitabständen wiederholt. Besonders bevorzugt befindet sich der Aktuator während seiner bestimmungsgemäßen Verwendung stets entweder im Sensorbetrieb oder im Aktuatorbetrieb. Während des Aktuatorbetriebs wird der Aktuator zur Erzeugung von Kräften und/oder Dehnungen und/oder Verlagerungen mit dem Schwingungsverringerungssignal beaufschlagt, welches während des Sensorbetriebs abgeschaltet werden kann.

In einer weiteren Ausführungsform ist der Aktuator an einem feststehenden Teil des Auflagers befestigt. Auf diese Weise läuft er nicht mit einer drehenden Komponente um, sodass er einfach elektrisch anzuschließen ist.

In einer weiteren Ausführungsform ist der Aktuator in Form eines Rings oder in Form eines oder mehrerer Ringsegmente ausgebildet. Diese Ausführungsform eignet sich besonders zur Aufnahme von Kräften, die den Aktuator radial durchlaufen. Alternativ oder zusätzlich kann der Aktuator auch scheibenförmig ausgebildet sein, um besonders gut Axialkräfte aufnehmen zu können. Scheibenförmig bedeutet hier nicht unbedingt, dass eine Scheibe eine runde Außenkontur haben muss; der Aktuator kann bspw. auch eine ringförmige Scheibe oder eine Scheibe in Form eines Ringsegments oder eines Rechtecks oder dergleichen mehr ausgestaltet sein.

In einer weiteren Ausführungsform ist der Aktuator als Teil eines Lagers für eine Welle oder ein anderes drehendes Teil wie etwa ein Zahnrad ausgebildet. Das Lager ist dabei Teil eines Auflagers, sodass das Auflager ein drehbares Teil lagert. Das Lager kann beispielsweise ein Wälzlager oder eine Lagerschale oder Lagerbuchse eines Gleitlagers sein. Es wird ein kompaktes Bauelement vorgeschlagen, das den Aktuator und das Lagerelement umfasst. Das Lagerelement kann in ein Auflager eingesetzt werden, um sowohl ein drehbares Teil zu lagern als auch eine Geräuschverringerung durchzuführen. Denkbar ist dabei, an dem Lager zwei gegenüberliegende Abschnitte mit jeweils wenigstens einem Aktuator zu versehen. Im Einbauzustand sind deren Positionen vorzugsweise in derselben Richtung zueinander orientiert, in der zumindest näherungsweise auch die Kraftübertragung zwischen den Zahnrädern stattfindet. Es ist weiter denkbar, mehr als zwei Aktuatoren am Umfang eines Lagers anzubringen. Durch geeignete Ansteuerung kann mit drei Aktuatoren einer Kraft aus einer beliebigen Richtung entgegengewirkt werden, wobei bevorzugt wird, dass die Aktuatoren um 120° mit Bezug auf die Lagermitte zueinander versetzt sind. Um die Aktuatoren anzusteuern, kann bei bekannter Richtung der ankommenden Kraft eine Transformation berechnet werden, aus welcher sich ergibt, mit welcher Amplitude die einzelnen Aktuatoren anzusteuern sind. Dazu kann grundsätzlich folgende Vektorrechnung benutzt werden:

$$\begin{bmatrix} U_\alpha \\ U_\beta \end{bmatrix} = \frac{2}{3} \cdot \begin{bmatrix} 1 & -1/2 & -1/2 \\ 0 & \sqrt{3}/2 & \sqrt{3}/2 \end{bmatrix} \begin{bmatrix} U_a \\ U_b \\ U_c \end{bmatrix},$$

wobei $U_\alpha$ und $U_\beta$ als Amplituden in einem Bezugskoordinatensystem zu verstehen sind, die gemeinsam die Richtung der ankommenden Kraft definieren. $U_a$, $U_b$ und $U_c$ definieren Amplituden, mit denen die einzelnen Aktuatoren angesteuert werden können. Der angegebene Tensor kann für Aktuatoren angewendet werden, die am Umfang des Lagers zueinander um jeweils 120° versetzt angeordnet sind; für andere Anordnungen sind entsprechende Tensoren denkbar und von einem Fachmann im Gebiet der Maschinendynamik berechenbar, wobei auch auf einschlägige Fachliteratur verweisen sei. Weiter ist denkbar, ein Lager an einer axialen Seite mit einem Aktuator zu verbinden. Weiterhin ist denkbar, die Aktuatoren und die Ansteuerung dazu als Ausrüstungsatz für ein Lager bereitzustellen, sodass es an verschiedene Lager angebracht werden kann.

In dieser Variante werden die zwei Aktuatoren bevorzugt mit demselben Signal angesteuert, wobei einem der Aktuatoren das Signal mit einer 180° Phasendrehung zugeführt wird. Auf diese Weise wirken die beiden Aktuatoren im Falle gleicher oder ähnlicher Bauart in dieselbe Richtung. Dazu kann bspw. einer der Aktuatoren seine Dicke vergrößern, während der andere seine Dicke verringert, sodass das Lager in Bezug auf seinen Einbauort verschoben wird. Durch die Trägheit der zu bewegenden Teile ist es möglich, dass die Aktuatoren möglicherweise zunächst nur Kräfte aufbringen, bis schließlich die gewünschte Bewegung vollzogen wird.

In einer weiteren Ausführungsform ist die Sensoreinrichtung dazu eingerichtet, eine Kraftmessung und/oder eine Dehnungsmessung auszuführen. Beispielsweise kann dies mit einem magnetostriktiven oder piezoelektrischen Wirkelement erreicht werden. Mit solchen oder wirkähnlichen Sensoreinrichtungen kann z. B. ein Dehnungszustand aus einer Induktivitäts- bzw. Kapazitätsmessung ermittelt werden. Der Dehnungszustand hängt wiederum mit der Kraft zusammen, welche auf die Sensoreinrichtung wirkt.

In einer weiteren Ausführungsform wird bei der Erzeugung des Schwingungskompensationssignals berücksichtigt, dass Schall von der Erzeugungsstelle zwischen den Zahnrädern eine gewisse Zeit braucht, bis der Schall den Aktuator erreicht.

In einer weiteren Ausführungsform hat der Aktuator eine Steifigkeit, die mit einer Eigenfrequenz des Aktuators in dessen Wirkrichtung einhergeht, die deutlich über wenige Kilohertz hinausgeht und z. B. zwischen 10 und 25 kHz oder noch höher liegt. Dies hat den Vorteil, dass Geräusche, die vom menschlichen Ohr besonders laut gehört werden und typischerweise in einem Bereich von 1 bis 5 kHz liegen, gut unterdrückt werden können. Ultraschall ist ohnehin für das menschliche Ohr nicht hörbar und beginnt für Hörer individuell zwischen typischerweise 15 bis etwa 22 kHz. Die Zahneingriffsfrequenz liegt besonders bevorzugt unterhalb der Eigenfrequenz des Aktuators. Vorzugsweise reagiert die Regeleinrichtung zur Erzeugung des Schwingungskompensationssignals erheblich schneller als die Laufzeit des Schalls von der Zahneingriffsstelle zu dem Aktuator.

In einer weiteren Ausführungsform werden in der Regeleinrichtung zur Erzeugung des Schwingungsverrringerungssignals eine Drehzahl und/oder eine Winkelstellung eines der Geräusche erzeugenden Zahnräder berücksichtigt. Vorzugsweise ist dabei die Winkelstellung so hoch aufgelöst, dass das Abwälzen von zwei Zähnen aufeinander darstellbar ist. Unter Umständen kann es jedoch auch ausreichen, dass erkannt werden kann, ob Zähne in Eingriff oder außer Eingriff treten. Die Drehzahl kann aus der Winkelstellung abgeleitet werden. Die Drehzahl und die Zahneingriffsfrequenz können jeweils eine Grundwelle für einige der in dem Geräuschspektrum vorhandenen Frequenzen sein, die typischerweise durch Nichtlinearitäten als Oberwellen ihrer Grundwelle erscheinen. Zur Erfassung der Drehzahl und/oder Winkelstellung können ein Phasensensor und/oder ein Drehzahlsensor vorhanden sein. Es ist jedoch auch denkbar, aus den gemessenen Signalen auf die Drehzahl und/oder die Winkelstellung zu schließen, nämlich insbesondere, wenn bestimmte Geräuschmuster erkannt werden, die für typische Winkelstellungen oder Drehzahlen charakteristisch sind. Vorzugsweise wird die Regelungseinrichtung auf die vorliegende Drehzahl und/oder Zahneingriffsfrequenz abgestimmt, womit eine besonders gute Unterdrückung der Geräusche erreicht werden kann.

In einem weiteren Aspekt der Erfindung wird ein Getriebe mit einer Vorrichtung nach einer der vorstehend beschriebenen Ausführungsformen vorgeschlagen. Die Vorteile der Erfindung werden entsprechend verwirklicht.

In einer Ausführungsform des Getriebes ist das Getriebe als Fahrzeuggetriebe ausgeführt, insbesondere als ein Getriebe für ein elektrisch angetriebenes Fahrzeug wie etwa ein Elektrofahrrad oder ein Elektroauto oder ein elektrisch angetriebener Transporter oder Lastkraftwagen. Auf diese Weise können die Geräuschemissionen eines solchen Fahrzeuges gesenkt werden. Selbstverständlich ist auch der Einsatz in Fahrzeugen mit Verbrennungsmotor möglich.

In einem weiteren Aspekt wird ein Verfahren zur Verringerung von Zahnradgeräuschen vorgeschlagen. Zahnradgeräusche entstehen, wenn ein Antriebszahnrad von einer Antriebsmaschine angetrieben wird und mit einem Abtriebszahnrad in Eingriff steht, wobei ein Drehmoment zwischen dem Antriebszahnrad und dem Abtriebszahnrad übertragen wird. Die Kräfte auf wenigstens einem Zahnrad werden über ein Auflager an ein Gehäuse weitergegeben, insbesondere an ein Getriebeghäuse. Ein solches Auflager kann an einer Welle oder Achse angeordnet sein, mit welcher das Zahnrad über einen Kraftübertragungsweg verbunden ist.

Von der Eingriffsstelle der Zahnräder werden Schwingungen zu den Auflagern der Lager übertragen. Die Aktuatoren werden derart angesteuert, dass sie bewirken, dass die Schwingungen möglichst nicht durch das Auflager weiterlaufen und in das Gehäuse eindringen, wo der Schall über eine große Fläche abgegeben wird und somit gut hörbar wird. Zur Erzeugung eines Ansteuersignals für den Aktuator ist eine Regeleinrichtung vorgesehen. Die Regeleinrichtung erhält Messsignale über den Schwingungszustand von einer Sensoreinrichtung. Erfindungsgemäß ist ein Aktuator vorgesehen, welcher auch als Sensoreinrichtung wirken kann. Dies kann, wie schon in Bezug auf die oben beschriebene Vorrichtung ausgeführt, bspw. mit einem magnetostriktiven oder piezoelektrischen Wirkelement erreicht werden. Vorteilhaft wird dabei ein separates Sensorelement sowie seine mechanische Befestigung und Verkabelung eingespart. Die Regeleinrichtung verwendet vorzugsweise ein Winkelsignal und/oder ein Drehzahlsignal zur Bereitstellung eines Ansteuersignals für den Aktuator.

In einer Ausführungsform des Verfahrens wird der Aktuator nicht zeitgleich als Aktuator und als Sensoreinrichtung verwendet. In dieser Ausführungsform wird der Aktuator stets zeitversetzt in einem Aktuatorbetrieb und einem Sensorbetrieb eingesetzt. Auf diese Weise kann der Aktuator seine Entkopplungsfunktion erfüllen und die Sensoreinrichtung kann der Regeleinrichtung davon unabhängig Messsignale liefern. Vorzugsweise wird in regelmäßigen Zeitabständen zwischen dem Sensorbetrieb und dem Aktuatorbetrieb umgeschaltet. Vorzugsweise ist der Sensorbetrieb deutlich kürzer als der Aktuatorbetrieb, sodass ein kurzzeitiger Wegfall der Aktuatorfunktion des Aktuators die Unterdrückung von Schwingungen nur wenig beeinflusst.

In einer weiteren Ausführungsform des Verfahrens wird bei der Bereitstellung des Schwingungskompensationssignals eine Laufzeit des Schalls von seiner Erzeugungsstelle am Zahneingriff zu dem Aktuator berücksichtigt. Auf diese Weise kann die Schallunterdrückung optimiert werden.

Details der vorstehend beschriebenen Ausführungsformen der Vorrichtung zur Verringerung von Zahnradgeräuschen oder des vorstehend beschriebenen Getriebes können auch in Weiterbildungen des Verfahrens zur Anwendung kommen.

Kurze Beschreibung der Zeichnungen

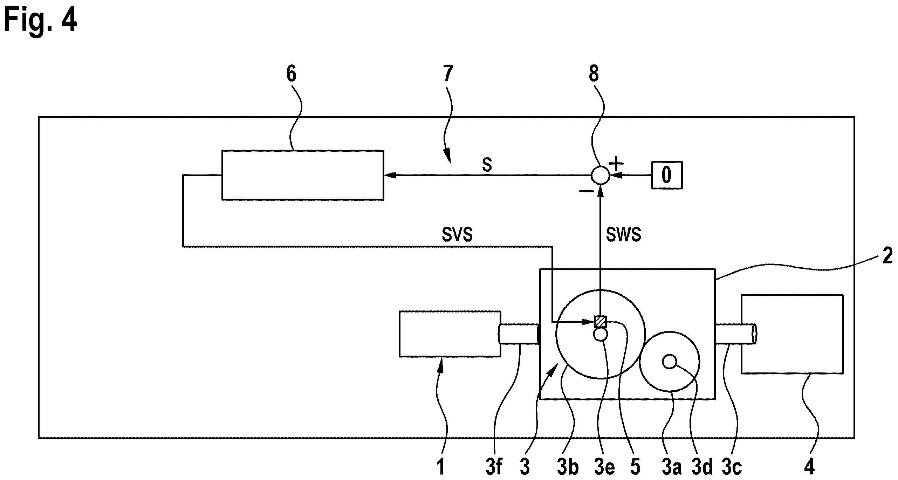

Nachfolgend wird ein bevorzugtes Ausführungsbeispiel der Erfindung unter Bezugnahme auf die begleitende Figur 4 im Detail beschrieben. In den Ausführungsbeispielen sind gleiche beziehungsweise funktional gleiche Teile jeweils mit den gleichen Bezugszeichen bezeichnet.

In den Zeichnungen ist:

Figur 1a)      ein Diagramm der Kopplungssteifigkeit eines Stirnradgetriebes mit Geradverzahnung (Stand der Technik),

Figur 1b)      ein Ordnungsspektrum angeregter Oberwellen eines Stirnradgetriebes mit Geradverzahnung (Stand der Technik),

Figur 1c)      ein Diagramm der Kopplungssteifigkeit eines Stirnradgetriebes mit Schrägverzahnung (Stand der Technik),

Figur 1d)      ein Ordnungsspektrum angeregter Oberwellen eines Stirnradgetriebes mit Schrägverzahnung (Stand der Technik),

Figur 2      beispielhaft und schematisch die Erzeugung von Koppelkräften zwischen Zahnrädern aus einem Antriebsmoment sowie die Erzeugung einer Lagerreaktionskraft (Stand der Technik),

Figur 3      ein Diagramm mit einer Darstellung der Amplitude einer wechselnden Koppelkraft und einer Lagerreaktionskraft über der Zeit (Stand der Technik), und

Figur 4      ein schematisch dargestelltes Blockdiagramm einer Ausführungsform der Erfindung mit einer Regelschleife zur Erzeugung eines Schwingungsverringerungssignals,

Figur 5      eine schematische Darstellung eines Querschnitts von zwei Zahnrädern, die im Eingriff stehen und jeweils auf Achsen gelagert sind, wobei Aktuatoren an einer Befestigungsstelle der Achsen in einem Gehäuse angeordnet sind,

Figur 6      eine Figur, die weitgehend Figur 5 entspricht, jedoch mit dem Unterschied, dass die Aktuatoren an Lagerstellen der Zahnräder auf den Achsen angeordnet sind,

Figur 7 eine schematische Darstellung von zwei fliegend gelagerten Zahnrädern im Eingriff mit Aktuatoren an den Lagerstellen,

Figur 8 eine schematische Darstellung von zwei Zahnrädern im Eingriff, wobei eines der Zahnräder zwischen zwei Abschnitten eines Gehäuses eines Getriebes gelagert ist,

Figur 9 eine schematische Darstellung eines Kugellagers mit zwei daran angeordneten Aktuatoren,

Figur 10 eine schematische Darstellung eines Kugellagers mit drei daran angeordneten Aktuatoren und

Figur 11 eine schematische Darstellung einer Einbausituation eines Kugellagers in einem Gehäuse mit einem scheibenförmigen, axial wirkenden Aktuator.

Figur 4 zeigt schematisch eine Darstellung einer Vorrichtung zur Verringerung von Zahnradabwälzgeräuschen als schematisches Blockdiagramm. Ein Getriebe 3 mit einem Getriebegehäuse 2 wird von einem Motor 1 angetrieben, beispielsweise wie gezeigt über eine Antriebswelle 3f. In dem Getriebe stehen Zahnräder 3a und 3b miteinander im Eingriff. Das Zahnrad 3a ist auf einer Welle 3d gelagert, während das Zahnrad 3b auf einer Welle 3e gelagert ist. Über eine Abtriebswelle 3c wird Drehmoment aus dem Getriebe 3 an eine Last 4 abgegeben. In dem Getriebe ist ein Aktuator 5 angeordnet, welcher auch als Sensoreinrichtung wirken kann. Diese erzeugt ein den Zahnradgeräuschen entsprechendes Schwingungssignal SWS, welches an einen subtraktiven Eingang eines Summierpunktes 8 geleitet wird, welcher ebenso wie der Regler 6 einen Teil einer Regeleinrichtung 7 bildet. Das Schwingungssignal SWS wird von einem Soll-Wert subtrahiert, der hier beispielhaft zu 0 gesetzt ist, da die Getriebegeräusche unterdrückt werden sollen. Am Summationspunkt 8 wird das Summensignal S erzeugt und zum Regler 6 geleitet. Der Regler 6 erzeugt ein Schwingungsverringerungssignal SVS, welches in Amplitude und Phase so erzeugt wird, dass an dem Aktuator ankommende Schwingungen möglichst nicht in das Getriebegehäuse 2 weitergeleitet werden. Sie gelangen dann nicht oder nur in geringerem Ausmaße von der Welle 3e in das Getriebegehäuse 2, sodass die Schallabstrahlung reduziert wird. Das Schwingungsverringerungssignal SVS wird dem Aktuator 5 zugeleitet.

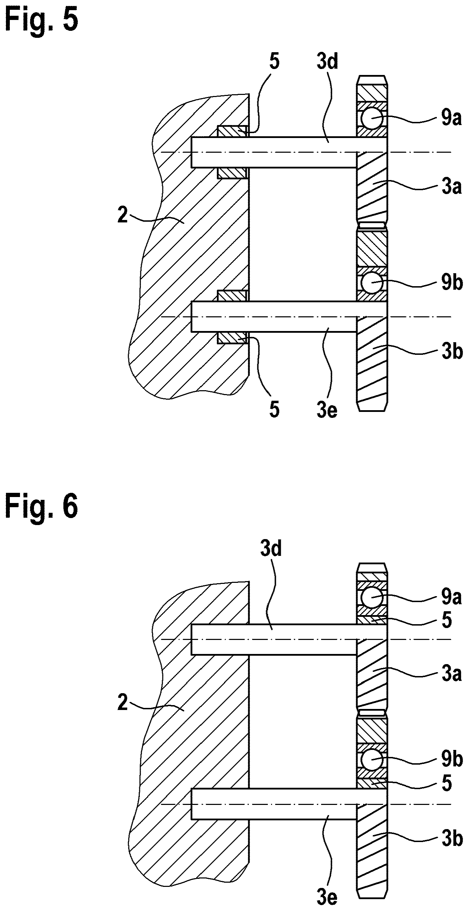

Figur 5 zeigt in einer schematischen Darstellung zwei Zahnräder 3a und 3b in Eingriff, welche jeweils über Lager 9a und 9b auf einer Achse 3d bzw. 3e gelagert sind. Die Zahnräder 3a und 3b sind im Halbschnitt dargestellt, wobei die in der Zeichnung jeweils oben liegende Hälfte geschnitten gezeigt ist. Die Achsen 3d und 3e sind in einem Gehäuse 2 nicht drehbar gelagert. An jeder der als Auflager dienenden Lagerstellen ist ein Aktuator 5 angeordnet, welcher zwischen der jeweiligen Welle 3d bzw. 3e und dem Gehäuse 2 platziert ist. Die Aktuatoren können mehrere Teilaktuatoren umfassen, was auch für die Aktuatoren der nachfolgend beschriebenen Figuren 6 bis 8 gilt. Vorzugsweise arbeiten diese Aktuatoren 5 derart, dass bei einer Ansteuerung einer der Teilaktuatoren auf einer Seite der Achse bzw. eines Lagers in Wirkrichtung der Zahneingriffskräfte dünner wird, während ein anderer Teilaktuator auf der gegenüberliegenden Seite zugleich dicker wird. Auf diese Weise wird eine relative Verschiebung zwischen der Achse und dem Zahnrad bzw. zwischen dem Gehäuse und der Achse bzw. zwischen dem Gehäuse und einer Welle mittels der Wirkung beider Aktuatoren bewirkt, sodass sie in eine starre Auflagerbohrung eingebaut werden können. Die Aktuatoren wirken bevorzugt in einer Richtung rechtwinklig zur Zeichenebene, da in dieser Richtung auch die Kräfte zwischen den Zahnrädern 3a, 3b übertragen werden. Eine entsprechende Ansteuerung der Aktuatoren 5 verhindert oder verringert den Eintrag von Schwingungen aus dem Zahneingriff der Zahnräder 3a und 3b in das Gehäuse 2.

Figur 6 entspricht weitgehend der Figur 5, jedoch mit dem Unterschied, dass die Aktuatoren 5 nicht im Gehäuse angeordnet sind, sondern auf den Achsen 3d und 3e. Die Aktuatoren sind zudem im Inneren von Kugellagern 9a und 9b, die jeweils eines der Zahnräder 3a und 3b lagern, angeordnet. Diese Anordnung ist vorteilhaft, weil die Aktuatoren 5 in dieser Anordnung weniger Drehmoment aufbringen müssen.

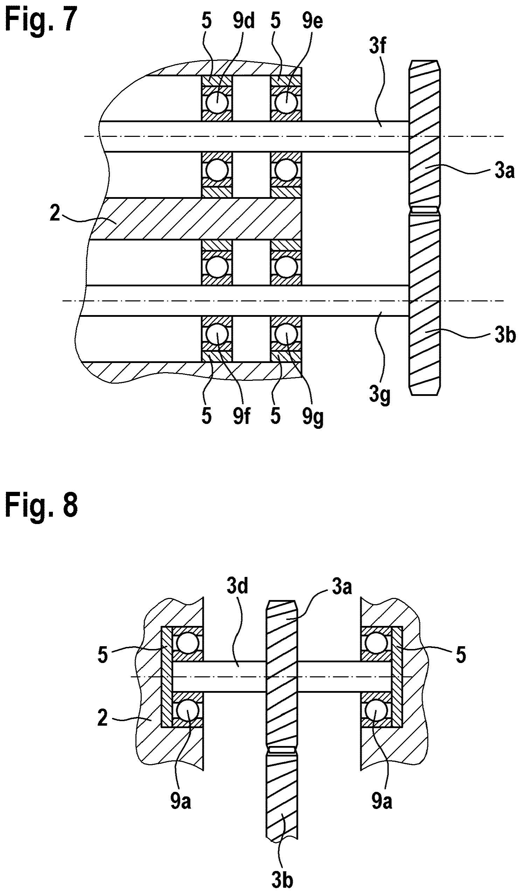

Figur 7 zeigt in einer schematischen Darstellung zwei Zahnräder 3a und 3b im Eingriff, welche jeweils auf Wellen 3f und 3g fliegend gelagert sind. Die Wellen 3f und 3g sind dazu jeweils in einer Bohrung in dem Gehäuse 2 gelagert. Auf jeder Welle 3f, 3g sind zwei Kugellager 9d, 9e bzw. 9f, 9g radial zwischen der Welle 3f, 3g und dem Gehäuse 2 jeweils in einem Abstand zueinander angeordnet. Jedes der Kugellager 9d bis 9f ist an seinem Außenring mit einem Aktuator 5 versehen, welcher eine Relativbewegung zwischen dem Gehäuse 2 und dem Kugellager 9e bzw. 9g bewirken kann. Die Ansteuerung der Aktuatoren 5 wird derart durchgeführt, dass Schwingungen aus dem Zahneingriff nicht oder verringert von den Wellen 3f bzw. 3g in das Gehäuse 2 weitergeleitet werden.

Figur 8 zeigt zwei Zahnräder 3a und 3b im Eingriff, wobei das Zahnrad 3a auf einer Welle 3d befestigt ist. Die Zahnräder 3a, 3b befinden sich in einem Zwischenraum zwischen zwei Oberflächen des Gehäuses 2. In diese Oberflächen ist jeweils eine Aussparung eingebracht, in welchen jeweils ein Kugellager 9a eingebracht ist. In diesem Kugellager 9a ist die Welle 3d des Zahnrads 3a gelagert. Die Zahnräder 3a und 3b sind schräg verzahnt und stehen im Eingriff. Dies bewirkt, dass auf das Zahnrad 3a und auch auf die Welle 3d Axialkräfte ausgeübt werden. Um den Übergang von dadurch entstehenden Geräuschen in das Gehäuse 2 zu verhindern oder zu verringern, ist jedes der Lager 9a an seiner zum Gehäuse 2 gerichteten Stirnseite mit einem scheibenförmigen Aktuator 5 versehen. Durch geeignete Ansteuerung des Aktuators 5 kann der Eintrag von Schwingungen, die in Axialrichtung von der Welle 3d auf das Lager übertragen werden, in das Gehäuse 2 verhindert oder verringert werden. Dabei ist denkbar, dass die Kugellager 9a jeweils an ihrem Umfang mit weiteren, nicht dargestellten Aktuatoren umgeben sind, welche außerdem die Übertragung von Kräften aus der Welle 3d in radialer Richtung des Kugellagers in das Gehäuse 2 unterdrücken oder verringern.

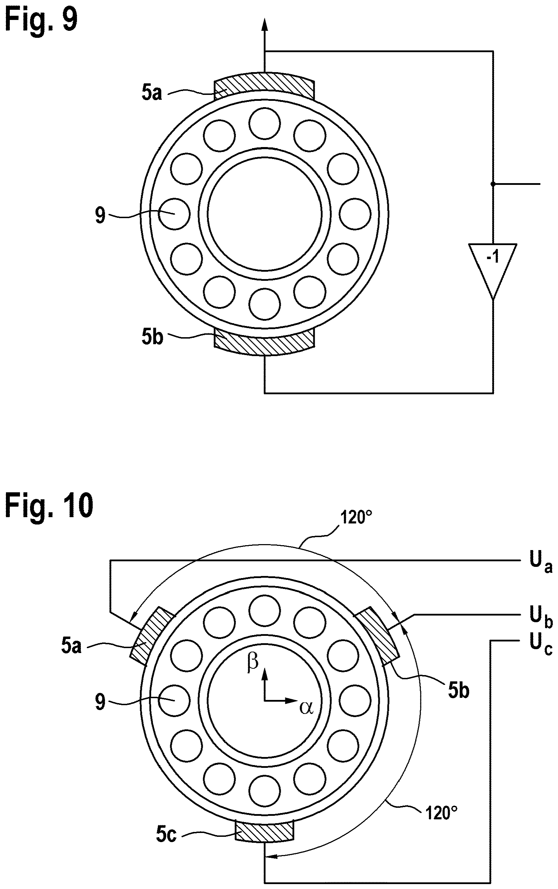

Figur 9 zeigt schematisch ein Kugellager, an dessen Außenring zwei einander gegenüberliegende Aktuatoren 5a und 5b angeordnet sind. Die Aktuatoren 5a und 5b sind ringsegmentförmig ausgeführt und erstrecken sich über einen Winkel von 90° oder weniger über den Außenumfang des Kugellagers 9. Die Aktuatoren 5a und 5b sind getrennt ansteuerbar. Die Ansteuerung erfolgt dabei derart, dass ein Signal, dass auf den Aktuator 5a gegeben wird, invertiert auf den Aktuator 5b gegeben wird. Unter einer Invertierung ist eine Phasendrehung um 180° zu verstehen. Alternativ kann auch dasselbe Signal auf beide Aktuatoren gegeben werden, wobei die Aktuatoren bei derselben Ansteuerung entgegengestzte Wirkung zeigen, beispielsweise weil Elektroden au einem Piezomaterial entgegengesetzt angeschlossen sind oder das Piezomaterial entgegengesetzt polarisiert ist. Durch die Ansteuerung bewirken die Aktuatoren 5a und 5b im Verbund eine Relativbewegung zwischen den von dem Kugellager 9 weggerichteten Außenoberflächen der Aktuatoren 5a und 5b in Bezug auf das Kugellager. Bevor Bewegungen eintreten, können auch zunächst nur Kräfte an den Aktuatoren vorliegen.

Figur 10 zeigt schematisch ein Kugellager 9, an dessen Außenumfang drei Aktuatoren 5a, 5b und 5c angeordnet sind. Die Aktuatoren 5a, 5b und 5c sind jeweils unter einem Winkel von 120° zueinander in Bezug auf die Drehachse des Kugellagers 9 angeordnet. Schwingungskräfte können aus verschiedenen Richtungen von einer nicht dargestellten Welle aus auf den Innenring des Kugellagers 9 übertragen werden. Um die Weitergabe dieser Schwingungen an ein Gehäuse, in welches das Kugellager mit den Aktuatoren eingebaut ist und welches nicht dargestellt ist, zu unterdrücken oder zu verringern, können die drei Aktuatoren 5a, 5b und 5c mit getrennten Signalen $U_\alpha$, $U_\beta$ und $U_c$ angesteuert werden. Die Signale $U_\alpha$, $U_\beta$ und $U_c$ können aus der nachfolgend dargestellten Transformation ermittelt werden:

$$\begin{bmatrix} U_\alpha \\ U_\beta \end{bmatrix} = \frac{2}{3} \cdot \begin{bmatrix} 1 & -1/2 & -1/2 \\ 0 & \sqrt{3}/2 & \sqrt{3}/2 \end{bmatrix} \begin{bmatrix} U_a \\ U_b \\ U_c \end{bmatrix},$$

wobei $U_\alpha$ und $U_\beta$ Amplituden der zu kompensierenden Schwingung sind, welche in Richtung der Achse a bzw. β verlaufen. Einem Fachmann ist klar, dass sich aus den Verhältnissen der Amplituden $U_\alpha$ und $U_\beta$ der Winkel der einwirkenden Kraft bestimmen lässt. Die Ansteuersignale $U_a$, $U_{b\text{ und}}$ $U_c$ werden durch Anwendung eines Tensors oder entsprechenden mathematischen Methoden ermittelt. Der angegebene Tensor ist für die in Figur 10 gezeigte Situation mit um 120° zueinander versetzten Aktuatoren 5a, 5b und 5c geeignet. Bei den Ansteuersignalen $U_a$, $U_{b\text{ und}}$ $U_c$ kann es sich um Spannungen handeln, insbesondere für einen Piezo-Aktuator.

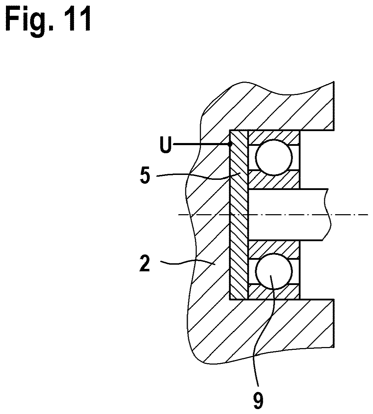

Figur 11 zeigt schematisch einen Querschnitt durch einen Abschnitt des Gehäuses 2, in den in einer Bohrung ein Kugellager 9 eingebracht ist. Die Einbausituation in Figur 11 entspricht der in Figur 8 dargestellten Einbausituation. An einer Stirnfläche des Kugellagers 9, welche zu dem Gehäuse 2 gewandt ist, ist ein Aktuator 5 angeordnet, welcher scheibenförmig ausgeführt ist. Axialkräfte, welche in das Kugellager 9 eingeleitet werden, verlaufen über den Aktuator 5 und in das Gehäuse 2. Durch geeignete Ansteuerung mit einem Stellsignal U kann die Übertragung von Kräften in das Gehäuse 2 und deren Abstrahlung als Schall verhindert oder verringert werden.

**Patentansprüche**

1. Vorrichtung zur Verringerung von Zahnradgeräuschen eines mit einem Abtriebszahnrad (3b) in Zahneingriff stehenden Antriebszahnrades (3a), wobei Kräfte von den Zahnrädern (3a, 3b) über zumindest ein Auflager in ein Gehäuse (2) eingeleitet werden, wobei die Vorrichtung eine Sensoreinrichtung, eine Regeleinrichtung (7) und einen Aktuator (5) aufweist und
wobei mittels der Sensoreinrichtung ein dynamisches Schwingungssignal (SWS) erfasst und das Schwingungssignal (SWS) der Regeleinrichtung (7) zugeführt wird, wobei mittels der Regeleinrichtung (7) ein Schwingungsverringerungssignal (SVS) erzeugt wird, das dem Aktuator (5) zugeführt wird, **dadurch gekennzeichnet, dass**
der Aktuator (5) derart an oder in dem Auflager angeordnet ist, dass Kräfte von den Zahnrädern (3a, 3c) über den Aktuator (5) in das Gehäuse (2) übertragen werden, wobei mittels des Aktuators (5) aktiv eine relative Verschiebung und/oder eine Kraftbeaufschlagung einer von dem Auflager getragenen Komponente bewirkt wird, und, dass der Aktuator (5) auch als Sensoreinrichtung verwendet wird.

2. Vorrichtung Anspruch 1, **dadurch gekennzeichnet, dass** der Aktuator (5) mittels verschiedener Mess- und Ansteuerzeiten zeitlich versetzt zueinander als Sensoreinrichtung und als Aktuator (5) betrieben wird..

**3.** Vorrichtung nach Anspruch 1 oder 2, **dadurch gekennzeichnet, dass** der Aktuator (5) an einem nicht drehenden Teil des Auflagers befestigt ist.

**4.** Vorrichtung nach einem der Ansprüche 1 bis 3, **dadurch gekennzeichnet, dass** der Aktuator (5) ringförmig in Form eines oder mehrerer Ringsegmente oder scheibenförmig ausgebildet ist.

**5.** Vorrichtung nach einem der vorangehenden Ansprüche, **dadurch gekennzeichnet, dass** der Aktuator (5) als Teil eines Lagers für eine drehende Komponente ausgebildet, wobei das Lager einen Teil eines Auflagers bildet.

**6.** Vorrichtung nach einem der vorangehenden Ansprüche, **dadurch gekennzeichnet, dass** der Aktuator (5) eine Wirkeinrichtung aus einem Piezomaterial und/oder einem magnetostriktiv wirksamen Material umfasst.

**7.** Vorrichtung nach einem der vorangehenden Ansprüche, **dadurch gekennzeichnet, dass** die Sensoreinrichtung als Kraftmesseinrichtung und/oder als Dehnungsmesseinrichtung ausgestaltet ist.

**8.** Vorrichtung nach einem der vorangehenden Ansprüche, **dadurch gekennzeichnet, dass** ein Kraftfluss von dem Zahneingriff zum Gehäuse über ein passives Dämpfungselement verläuft, welches zwischen dem Aktuator und dem Gehäuse oder zwischen dem Lager und dem Aktuator angeordnet ist.

**9.** Vorrichtung nach einem der vorangehenden Ansprüche, **dadurch gekennzeichnet, dass** bei der Erzeugung des Schwingungsverringerungssignals (SVS) eine zeitliche Verzögerung zwischen der Erzeugung der Schalls und der Aufnahme durch die Sensoreinrichtung berücksichtigt wird.

**10.** Vorrichtung nach einem der vorangehenden Ansprüche, **dadurch gekennzeichnet, dass** die Eigenfrequenz des Aktuators (5) in seiner Wirkrichtung zwischen 10 kHz und 25 kHz oder darüber liegt.

**11.** Vorrichtung nach einem der vorangehenden Ansprüche, **dadurch gekennzeichnet, dass** bei der Erzeugung des Schwingungsverringerungssignals (SVS) eine Drehzahl und/oder eine Winkelstellung wenigstens eines der Zahnräder (3a, 3b) berücksichtigt wird.

**12.** Getriebe mit einer Vorrichtung nach einem der Ansprüche 1 bis 11.

**13.** Verfahren zur Verringerung von Zahnradgeräuschen,
wobei ein Antriebszahnrad (3a) angetrieben wird und mit einem Abtriebszahnrad (3b) in Zahneingriff steht, wobei das Antriebszahnrad (3a) und/oder das Abtriebszahnrad (3b) in einem Auflager (3d, 3e) gelagert ist, und
mittels einer Sensoreinrichtung (5) ein Schwingungssignal (SWS) erfasst wird und das Schwingungssignal (SWS) einer Regeleinrichtung (7) zugeführt wird, wobei die Regeleinrichtung (7) ein Schwingungsverringerungssignal (SVS) erzeugt, das einem Aktuator (5) zugeführt wird,
**dadurch gekennzeichnet, dass**
über den Aktuator (5) Kräfte von den Zahnrädern (3a, 3c) zu dem Gehäuse geleitet werden, wobei der Aktuator (5) aktiv eine relative Verschiebung und/oder eine Kraftbeaufschlagung einer von dem Auflager getragenen Komponente bewirkt, wobei der Aktuator (5) auch als Sensoreinrichtung eingesetzt wird.

**14.** Verfahren nach Anspruch 13, **dadurch gekennzeichnet, dass** ein Betrieb als Aktuator (5) und ein Betrieb als Sensoreinrichtung zeitlich versetzt stattfindet.

**15.** Verfahren nach einem der Ansprüche 13 oder 14, **dadurch gekennzeichnet, dass** bei der Erzeugung des Schwingungsverringerungssignals (SVS) eine zeitliche Verzögerung zwischen der Erzeugung der Schalls und der Aufnahme durch die Sensoreinrichtung berücksichtigt wird.

**Claims**

**1.** Device for reducing toothed gear noises of a drive toothed gear (3a) which is in meshing engagement with an output toothed gear (3b), wherein forces from the toothed gears (3a, 3b) are introduced into a housing (2) via at least one support,
wherein the device has a sensor device, a closed-loop control device (7) and an actuator (5), and wherein, by means of the sensor device, a dynamic oscillation signal (SWS) is detected and the oscillation signal (SWS) is fed to the closed-loop control device (7),
wherein, by means of the closed-loop control device (7), an oscillation reduction signal (SVS) is generated which is fed to the actuator (5),
**characterized in that**
the actuator (5) is arranged on or in the support such that forces are transmitted from the toothed gears (3a, 3c) into the housing (2) via the actuator (5), wherein a relative displacement of and/or an exertion of force on a component supported by the support is actively effected by means of the actuator (5), and **in that** the actuator (5) is also used as sensor device.

**2.** Device according to Claim 1, **characterized in that** the actuator (5) is, by means of different measurement and actuation times, operated as a sensor device and as an actuator (5) in a mutually time-offset manner.

**3.** Device according to Claim 1 or 2, **characterized in that** the actuator (5) is fastened to a non-rotating part of the support.

**4.** Device according to any of Claims 1 to 3, **characterized in that** the actuator (5) is of ringshaped form, in the form of one or more ring segments, or is of disc-shaped form.

**5.** Device according to any of the preceding claims, **characterized in that** the actuator (5) is formed as part of a bearing for a rotating component, wherein the bearing forms a part of a support.

**6.** Device according to any of the preceding claims, **characterized in that** the actuator (5) comprises an active device composed of a piezo material and/or a material with magnetostrictive action.

**7.** Device according to any of the preceding claims, **characterized in that** the sensor device is designed as a force measuring device and/or as a strain measuring device.

**8.** Device according to any of the preceding claims, **characterized in that** a force flow from the meshing engagement to the housing runs via a passive damping element which is arranged between the actuator and the housing or between the bearing and the actuator.

**9.** Device according to any of the preceding claims, **characterized in that** a time delay between the generation of the sound and the receipt by the sensor device is taken into consideration in the generation of the oscillation reduction signal (SVS).

**10.** Device according to any of the preceding claims, **characterized in that** the natural frequency of the actuator (5) in the direction of action thereof lies between 10 kHz and 25 kHz or above.

**11.** Device according to any of the preceding claims, **characterized in that** a rotational speed and/or an angular position of at least one of the toothed gears (3a, 3b) is taken into consideration in the generation of the oscillation reduction signal (SVS).

**12.** Transmission having a device according to any of Claims 1 to 11.

**13.** Method for reducing toothed gear noises,

wherein a drive toothed gear (3a) is driven and is in meshing engagement with an output toothed gear (3b), wherein the drive toothed gear (3a) and/or the output toothed gear (3b) is mounted in a support (3d, 3e), and,

by means of a sensor device (5), an oscillation signal (SWS) is detected and the oscillation signal (SWS) is fed to a closed-loop control device (7), wherein the closed-loop control device (7) generates an oscillation reduction signal (SVS) which is fed to an actuator (5),

**characterized in that**

forces are conducted from the toothed gears (3a, 3c) to the housing via the actuator (5), wherein the actuator (5) actively effects a relative displacement of and/or an exertion of force on a component supported by the support,

wherein the actuator (5) is also used as a sensor device.

**14.** Method according to Claim 13, **characterized in that** operation as an actuator (5) and operation as a sensor device occur in a time-offset manner.

**15.** Method according to either of Claims 13 and 14, **characterized in that** a time delay between the generation of the sound and the receipt by the sensor device is taken into consideration in the generation of the oscillation reduction signal (SVS).

## Revendications

**1.** Dispositif permettant de réduire le bruit d'engrenage d'une roue dentée menante (3a) en prise d'engrènement avec une roue dentée menée (3b), les forces des roues dentées (3a, 3b) étant introduites dans un carter (2) par l'intermédiaire d'au moins un coussinet,

dans lequel le dispositif présente un dispositif de détection, un dispositif de régulation (7) et un actionneur (5), et

dans lequel le dispositif de détection permet de détecter un signal de vibration dynamique (SWS) et d'amener le signal de vibration (SWS) au dispositif de régulation (7),

dans lequel le dispositif de régulation (7) produit un signal de réduction de vibration (SVS) qui est amené à l'actionneur (5),

**caractérisé en ce que** l'actionneur (5) est disposé sur ou dans le coussinet de telle sorte que les forces provenant des roues dentées (3a, 3c) sont transférées dans le carter (2) par l'intermédiaire de l'actionneur, l'actionneur (5) provoquant activement un décalage relatif du et/ou l'application d'une force sur un composant porté par le coussinet, et **en ce que** l'actionneur (5) est également utilisé en tant que dispositif de détection.

**2.** Dispositif selon la revendication 1, **caractérisé en ce que** l'actionneur (5) est exploité en tant que dispositif de détection et en tant qu'actionneur (5) de manière décalée dans le temps l'un par rapport à l'autre au moyen de différentes périodes de mesure et de pilotage.

**3.** Dispositif selon la revendication 1 ou 2, **caractérisé en ce que** l'actionneur (5) est fixé à une partie non tournante du coussinet.

**4.** Dispositif selon l'une quelconque des revendications 1 à 3, **caractérisé en ce que** l'actionneur (5) est réalisé en forme d'anneau sous la forme d'un ou de plusieurs segments d'anneau ou en forme de disque.

**5.** Dispositif selon l'une quelconque des revendications précédentes, **caractérisé en ce que** l'actionneur (5) est réalisé comme une partie d'un palier pour un composant tournant, le palier faisant partie d'un coussinet.

**6.** Dispositif selon l'une quelconque des revendications précédentes, **caractérisé en ce que** l'actionneur (5) comprend un dispositif actif en matériau piézoélectrique et/ou en matériau à effet magnétostrictif.

**7.** Dispositif selon l'une quelconque des revendications précédentes, **caractérisé en ce que** le dispositif de détection est configuré en tant que dispositif de mesure de force et/ou en tant que jauge de contrainte.

**8.** Dispositif selon l'une quelconque des revendications précédentes, **caractérisé en ce qu'**un flux de force va de la prise d'engrènement jusqu'au carter en passant par un élément amortisseur passif qui est disposé entre l'actionneur et le carter ou entre le palier et l'actionneur.

**9.** Dispositif selon l'une quelconque des revendications précédentes, **caractérisé en ce que** quand le signal de réduction de vibration (SVS) est produit, une temporisation entre la production du son et l'enregistrement par le dispositif de détection est prise en compte.

**10.** Dispositif selon l'une quelconque des revendications précédentes, **caractérisé en ce que** la fréquence fondamentale de l'actionneur (5) dans sa direction active est comprise entre 10 kHz et 25 kHz ou supérieure.

**11.** Dispositif selon l'une quelconque des revendications précédentes, **caractérisé en ce que** quand le signal de réduction de vibration (SVS) est produit, une vitesse de rotation et/ou une position angulaire d'au moins l'une des roues dentées (3a, 3b) est/sont prise(s) en compte.

**12.** Boîte de vitesses, comprenant un dispositif selon l'une quelconque des revendications 1 à 11.

**13.** Procédé permettant de réduire le bruit d'engrenage, dans lequel une roue dentée menante (3a) est entraînée et est en prise d'engrènement avec une roue dentée menée (3b), la roue dentée menante (3a) et/ou la roue dentée menée (3b) étant montée(s) sur un coussinet (3d, 3e), et
un dispositif de détection (5) permet de détecter un signal de vibration (SWS) et d'amener le signal de vibration (SWS) à un dispositif de régulation (7), le dispositif de régulation (7) produisant un signal de réduction de vibration (SVS) qui est amené à un actionneur (5),
**caractérisé en ce que** l'actionneur (5) permet de diriger jusqu'au carter les forces provenant des roues dentées (3a, 3c), l'actionneur (5) provoquant activement un décalage relatif du et/ou l'application d'une force sur un composant porté par le coussinet, l'actionneur (5) étant aussi mis en œuvre en tant que dispositif de détection.

**14.** Procédé selon la revendication 13, **caractérisé en ce qu'**un fonctionnement en tant qu'actionneur (5) et un fonctionnement en tant que dispositif de détection sont effectués de manière décalée dans le temps.

**15.** Procédé selon l'une quelconque des revendications 13 ou 14, **caractérisé en ce que** quand le signal de réduction de vibration (SVS) est produit, une temporisation entre la production du son et l'enregistrement par le dispositif de détection est prise en compte.

# Fig. 1a)

# Fig. 1b)

# Fig. 1c)

# Fig. 1d)

# Fig. 2

# Fig. 3

# Fig. 4

**Fig. 5**

**Fig. 6**

# Fig. 7

# Fig. 8

# Fig. 9

# Fig. 10

# Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5809843 A
- WO 9830813 A1
- WO 2012165946 A1

**In der Beschreibung aufgeführte Nicht-Patentliteratur**

- **LINKE, H.** Stirnradverzahnung. Hansaverlag, 2010
- **NAUNHEIMER, H. ; BERTSCHE, B. ; LECHNER, G.** Fahrzeuggetriebe - Grundlagen, Auswahl, Auslegung und Konstruktion. Springer Verlag, 2007
- **C. HANSEN ; S. SNYDER ; X. QIU ; L. BROOKS ; D. MOREAU.** Active control of noise and vibration. CRC Press, 2013, vol. 2